# EUROPEAN PATENT SPECIFICATION

(11) **EP 1 612 232 B1**
(45) Date of publication and mention of the grant of the patent: **19.09.2007**
(21) Application number: 04724116.1
(22) Date of filing: 29.03.2004
(51) Int. Cl.: C08G 65/40, H01M 4/96, H01M 8/02

(54) **CROSSLINKED IONICALLY CONDUCTING RESIN, AND IONICALLY CONDUCTING POLYMER MEMBRANES, BINDERS AND FUEL CELLS, MADE BY USING THE RESIN**
VERNETZTES IONENLEITENDES HARZ UND DAMIT HERGESTELLTE IONENLEITENDE POLYMERMEMBRANEN, BINDEMITTEL UND BRENNSTOFFZELLEN
RESINE RETICULEE A CONDUCTION IONIQUE, ET MEMBRANES POLYMERES A CONDUCTION IONIQUE, LIANTS ET PILES A COMBUSTIBLE FABRIQUES A PARTIR DE LADITE RESINE

(30) Priority: 07.04.2003 JP 2003102674
(43) Date of publication of application: 04.01.2006
(73) Proprietor: Mitsui Chemicals, Inc., Tokyo 105-7117 (JP)
(72) Inventor: FUJIYAMA, Satoko, c/o Mitsui Chemicals, Inc., Sodegaura-shi, Chiba 299-0265 (JP); OMI, Takehiko, c/o Mitsui Chemicals, Inc., Sodegaura-shi, Chiba 299-0265 (JP); ISHIKAWA, Junichi, c/o Mitsui Chemicals, Inc., Sodegaura-shi, Chiba 299-0265 (JP); KUROKI, Takashi, c/o Mitsui Chemicals, Inc., Minato-ku, Tokyo 105-7117 (JP); TAMAI, Shoji, c/o Mitsui Chemicals, Inc., Sodegaura-shi, Chiba 299-0265 (JP)
(74) Representative: HOFFMANN EITLE
(86) International application number: PCT/JP2004/004392
(87) International publication number: WO 2004/090015

(56) References cited:
- EP-A- 0 574 791
- WO-A-00/51716
- WO-A-02/25764
- WO-A-03/095509
- JP-A- 9 245 818
- JP-A- 2002 220 458
- JP-A- 2002 538 240
- JP-A- 2003 012 795
- JP-A- 2003 147 075
- JP-A- 2004 047 244
- US-A1- 2002 091 225

## Description

### TECHNICAL FIELD

The present invention relates to a crosslinked product obtained by crosslinking a crosslinkable ion conductive resin which can be applied to a fuel cell using a fuel such as hydrogen, alcohol or the like, which has high ion conductivity, and which is excellent in heat resistance, water resistance and solvent resistance, an ion conductive polymer membrane, an ion conductive binder, a composition for forming an electrode and an electrode using the crosslinkable ion conductive resin, and a fuel cell using the ion conductive polymer membrane, the ion conductive binder, the electrode composition and the electrode.

### BACKGROUND ART

In recent years, elements for storing new energy and power generating elements have been strongly in demand in the society from the viewpoint of environmental problem. A fuel cell has also been paid attention as one of such elements, which is the most expected power generating element in view of low pollution and high efficiency. The fuel cell is produced by electrochemically oxidizing a fuel such as hydrogen, methanol or the like using oxygen or air for converting a chemical energy of a fuel into the electric energy.

These fuel cells are classified into a phosphoric acid type, a molten carbonate type, a solid oxide type and a polymer electrolyte type according to the types of electrolyte used in the cells. The phosphoric acid type fuel cell has been already put into practice for use in electric power. However, the phosphoric acid type fuel cell is required to work at a high temperature (around 200°C). For such a reason, there are drawbacks in that it takes a long time for uptime and it makes difficult to realize a miniaturized system. Further, the proton conductivity of the phosphoric acid is low so that there is a drawback in that large current cannot be induced.

On the other hand, the polymer electrolyte type fuel cells are operated at a temperature of about from 80 to 100°C as a maximum. In addition, internal resistance in the fuel cell can be reduced by making the electrolyte membrane in use thin, thus enabling high current operation. For this reason, miniaturization can be realized. From this advantage, the polymer electrolyte type fuel cells have been actively studied.

For the polymer electrolyte membrane used in the polymer electrolyte type fuel cell, high ion conductivity for protons involved in the electrode reaction of the fuel cell has been in demand. As the ion conductive polymer electrolyte membrane material, a superacid group-containing fluorine polymer such as produce name: Nafion (registered trademark, a product of Du Pont Kabushiki Kaisha), a Dow membrane (a product of Dow Chemical Co.) or the like have been known. However, since these polymer electrolyte membrane materials are fluorinated polymers, there is a problem in that the cost is very expensive. Furthermore, since these polymers have a low glass transition temperature, moisture is not kept sufficiently at an operating temperature of 100° or so. Thus, there is a problem in that high ion conductivity cannot be fully activated so that ion conductivity is suddenly dropped and they cannot be operated as a fuel cell.

On the other hand, in order to have an ion conductivity, there has been disclosed a polymer arranged to have a residue capable of dissociating from ion, selected from a carboxylic acid group, a sulfonic acid group, and a phosphoric acid group in Japanese translations of PCT No. 1996-504293. However, a polymer skeleton and the ion conductivity were never disclosed in the patent.

Furthermore, an ether ketone containing a sulfonic acid group has been known in Macromol. Chem. Phys., 199, 1421-1426 (1998), Polymer, 40, 795-799 (1999), Polymer, 42, 3293-3296 (2001) or the like. In these documents was disclosed a polyether ketone containing a sulfonic acid group obtained by copolymerizing a monomer containing a sulfonic acid with a monomer which does not contain a sulfonic acid. However, according to these documents, the ratio of the monomer containing a sulfonic acid is increased, i.e., the amount of the sulfonic acid in polyether ketone is increased, the water resistance of the polymer is decreased and the polymer is finally dissolved in the water. So, a highly sulfonated polyether ketone could not be obtained.

In general, in order to obtain an ion conductive polymer electrolyte membrane with high proton conductivity, a highly sulfonated polymer is needed. However, it has been pointed out that such a polymer has a problem in that the water resistance is deteriorated.

On the other hand, in the polymer electrolyte type fuel cell, there is almost nothing reported about the fixation of an electrode material or a binder used for attaching an electrode to a membrane, but a fluorinated polymer containing a superacid group is uniquely used. However, the fluorinated polymer containing a superacid group is attached to a polymer electrolyte membrane comprising a fluorinated polymer containing a superacid group, whereas adhesion to an aromatic type polymer electrolyte membrane containing a protonic acid group was not enough.

For that reason, there has been demanded an ion conductive binder for a fuel cell in which the ion conductivity is high, the heat resistance and the water resistance are excellent, and adhesion to the aromatic type polymer electrolyte membrane containing a protonic acid group or the electrode material is excellent.

Accordingly, in order to solve such conventional problems, an object of the present invention is to provide a crosslinked product obtained by crosslinking a crosslinkable ion conductive resin comprising a crosslinkable polyether ketone having a protonic acid group in which the ion conductivity is high, and the heat resistance and the water resistance are excellent, and an ion conductive polymer membrane, an ion conductive binder, a composition for forming an electrode and an electrode using the resin, and a fuel cell using the ion conductive polymer membrane, the ion conductive binder, the electrode composition and the electrode.

WO 03/095509 relates to sulfonated copolymers which are useful in forming polymer electrolyte membranes used in fuel cells.

WO 02/25764 discusses ion-conducting sulfonated polymeric materials formed from the direct polymerization of a sulfonated monomer with at least one other monomer to form a sulfonated polymer.

WO 00/51716 relates to sulfonated aromatic polymers which are suitable in particular for producing membranes, and the use thereof in fuel cells, high-performance capacitors and dialysis apparatuses.

EP 0 574 791 discusses polymer electrolyte membranes based on a sulfonated aromatic polyether ketone.

### DISCLOSURE OF THE INVENTION

The crosslinked product obtained by crosslinking a crosslinkable ion conductive resin according to the present invention comprises a crosslinkable polyether ketone having a repeating unit represented by the following general formula (1), 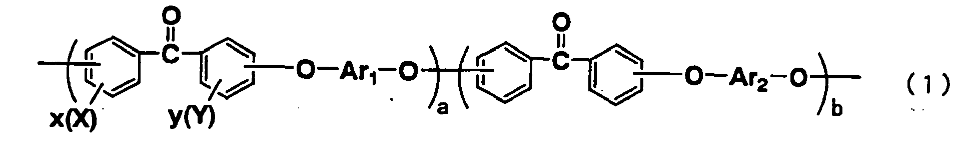 wherein, in the general formula (1), Ar₁ and Ar₂ have two or more aromatic rings respectively, at least two of which are bivalent groups linked by an alkylene bond; and hydrogen in an aromatic ring may be substituted with halogen, an alkyl group having 1 to 10 carbon atoms, a halogenated hydrocarbon group having 1 to 10 carbon atoms or a protonic acid group. The above alkylene is a group having 1 to 10 carbon atoms in which carbon atoms linked to an aromatic ring of at least one side are bonded to at least one hydrogen. Ar₁ and Ar₂ may be the same or different. X and Y respectively represent a protonic acid group selected from a sulfonic acid group, a carboxylic acid group, a phosphoric acid group, a sulfonimide group and an alkyl sulfonate group having 1 to 10 carbon atoms, or a group of a metal salt thereof; x and y are an integer of 0 to 4; x+y is at least not less than 1; and a and b are an integer of not less than 1.

According to the present invention, the crosslinked product obtained by crosslinking the above crosslinkable ion conductive resin by means of at least one of a light, a heat and an electron beam is provided.

The ion conductive polymer membrane according to the present invention comprises the aforementioned crosslinked product. Furthermore, the ion conductive binder according to the present invention comprises the crosslinked product obtained by crosslinking the aforementioned crosslinkable ion conductive resin.

Meanwhile, the composition for forming an electrode according to the present invention comprises the aforementioned ion conductive binder and an electrode material, while the electrode according to the present invention comprises the aforementioned composition for forming an electrode.

According to the present invention, the fuel cell using the aforementioned ion conductive polymer membrane and/or the ion conductive binder is provided.

### BRIEF DESCRIPTION OF THE DRAWINGS

Fig. 1 is a schematic view illustrating a cross-sectional structure of the fuel cell used in Examples of the present invention.
Fig. 2 is a block flow diagram illustrating a fuel cell evaluator used for the evaluation of the fuel cell in Examples.

Meaning of symbols in the drawings is as follows: 1, electrolyte membrane; 2, 2', catalyst-fed electrode; 3, gasket; 4, separator; 5, pressure sensitive plate; 6, gas flow channel; 7, clamping bolt; 8, fuel cell; 9, bubbling tank for humidifying; 10, electronic load; 11, mass flow controller; and 12, delivery pump.

### BEST MODE FOR CARRYING OUT THE INVENTION

The crosslinkable ion conductive resin and the ion conductive polymer membrane comprising the resin according to the present invention are specifically described below.

The crosslinkable ion conductive resin of the present invention comprises a polyether ketone containing a protonic acid group having a crosslinking group, and is the crosslinkable ion conductive resin containing a protonic acid group having a crosslinking group which is not derived from the protonic acid group and capable of crosslinking without forming any elimination component.

As the crosslinking group which is not derived from the protonic acid group of the present invention and capable of crosslinking without forming any elimination component, a carbonyl group and an alkylene group linked to an aromatic ring can be specifically cited. The alkylene group is preferably a group having 1 to 10 carbon atoms in which carbon atoms directly linked to the aromatic ring of at least one side are boned to at least one hydrogen, and more preferably a group having 1 to 3 carbon atoms in the main chain.

As a crosslinkable aromatic resin capable of having a crosslinking group such as a carbonyl group and an alkylene group linked to an aromatic ring along with a protonic acid group in a molecule, there can be exemplified, for example, aromatic polyether ketones, aromatic polyamides, aromatic polyimides, aromatic polyamideimides and aromatic polyazoles which have an ether group and a carbonyl group as linking groups of the aromatic ring. Among these, aromatic polyether ketones are the most preferable from the viewpoints of excellent solvent solubility in an uncrosslinked state and easy processability, for example, to form a membrane or the like, not subjecting to a hydrolysis by the hot water, an acid, the alkaline water, alcohols or the like.

The crosslinkable polyether ketone preferably has a repeating unit represented by the following general formula (1). Further, the aforementioned resin and/or the polymer membrane using the crosslinked product is/are suitable as an ion conductive polymer membrane for a fuel cell.

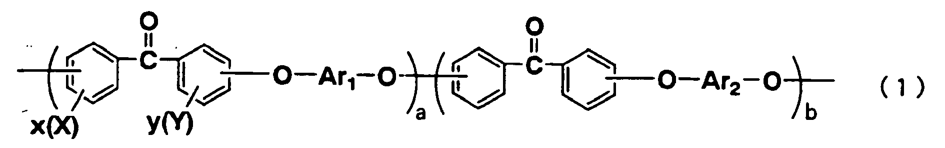

In the general formula (1), Ar₁ and Ar₂ have two or more aromatic rings respectively, at least two of which are bivalent groups linked by an alkylene bond; and hydrogen in an aromatic ring may be substituted with halogen, an alkyl group having 1 to 10 carbon atoms, a halogenated hydrocarbon group having 1 to 10 carbon atoms or a protonic acid group. The above alkylene is a group having 1 to 10 carbon atoms in which carbon atoms linked to an aromatic ring of at least one side are bonded to at least one hydrogen. Ar₁ and Ar₂ may be the same or different. X and Y respectively represent a protonic acid group selected from a sulfonic acid group, a carboxylic acid group, a phosphoric acid group, a sulfonimide group and an alkyl sulfonate group having 1 to 10 carbon atoms, or a group of a metal salt thereof; x and y are an integer of 0 to 4; x+y is at least not less than 1; and a and b are an integer of not less than 1.

The alkylene group linked to the aromatic ring constituting Ar₁ or Ar₂ in the above general formula (1) preferably has carbon atoms directly linked to the aromatic ring of at least one side bonding to hydrogen and more preferably has 1 to 10 carbon atoms having 1 to 3 carbon atoms in the main chain. Concrete examples thereof include a methylene group, an ethylidene group, a propylidene group, a butylidene group, an ethylene group, a propylene group, a 1,2-dimethylethylene group, an ethylethylene group, a 1,2-diethylethylene group, a trimethylene group, a 1-ethyl-2-methyltrimethylene group, a 1,2-diethyl-3-methyltrimethylene group or the like. Of the alkylene groups, a methylene group is the most preferable from the viewpoints of the reactivity at the time of crosslinking or heat resistance of polyether ketone.

As the aromatic ring constituting Ar₁ and Ar₂, there can be exemplified, for example, a 1,4-phenylene group, a 1,3-phenylene group, a 1,2-phenylene group or the like. Furthermore, as a bond linking these aromatic rings, in addition to the above alkylene group in which carbon atoms directly linked to the aromatic ring of at least one side are bonded to hydrogen, a direct bond, -CO-, -SO₂-, -S-, -CF₂-, -C(CH₃)₂-, -C(CF₃)₂-, -O-, a 9,9-fluorene group and the like can be used.

In the present invention, Ar₁ and Ar₂ in the above formula (1) are preferably the following formula (I) and/or the following formula (II).

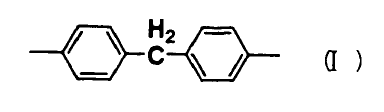

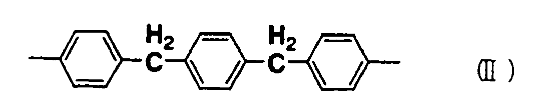

Furthermore, the crosslinkable polyether ketone of the present invention preferably contains 10 to 90 mole % of the repeating unit of the following formula (III) portion having a protonic acid group in the aforementioned formula (1), based on the total repeating units.

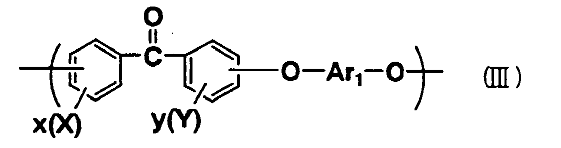

In the present invention, the protonic acid group represented by X and Y in the above formula (1) is selected from a sulfonic acid group, a carboxylic acid group, a phosphoric acid group, a sulfonimide group and an alkyl sulfonate group having 1 to 10 carbon atoms. Concrete examples thereof include a sulfonic acid group, a carboxylic acid group, a phosphonic acid group, a sulfonimide group and the like represented by the following formulae (a) to (d). Of the groups, a sulfonic acid group or an alkyl sulfonate group represented by the following formula (a) is preferable and a sulfonic acid group represented by n=0 in the following formula (a) is particularly preferable.

-CₙH₂ₙ-SO₃Y (where n is an integer of 0 to 10 and Y is H, Na or K) (a)

-CₙH₂ₙ-COOY(where n is an integer of 0 to 10 and Y is H, Na or K) (b)

-CₙH₂ₙ-PO₃Y₂(where n is an integer of 0 to 10 and Y is H, Na or K) (c)

-CₙH₂ₙSO₂-NY-SO₂CₙH₂ₙ (where n is an integer of 0 to 10 and Y is H, Na or K) (d)

The content of the protonic acid group of the crosslinkable ion conductive resin in the present invention is not particularly restricted, but it is preferably from 200 to 5000 g/mole and more preferably from 200 to 1000 g/mole in terms of the ion exchange group equivalent. Here, the ion exchange group equivalent is defined as the resin weight per 1 mole of the protonic acid group and means a reciprocal number of the protonic acid group moles per the unit weight of a resin. Namely, as the ion exchange group equivalent is smaller, the amount of the protonic acid group per the unit weight of a resin is large.

When the ion exchange group equivalent is too small, the solubility of the resin in the water in an uncrosslinked state is remarkably high, thereby making it difficult to prepare or purify the resin (removal of an inorganic acid or an inorganic salt from the resin). When the ion exchange group equivalent is too much, water resistance and methanol resistance even for the uncrosslinked resin are high (slow methanol permeation rate), resulting in lowering the necessity of crosslinkage. However, when the ion exchange group equivalent is excessively high, the ion conductivity is low, making it unable to obtain a high output fuel cell.

In order to synthesize the crosslinkable polyether ketone containing a protonic acid group represented by the aforementioned general formula (1), for example, it can be obtained by subjecting an aromatic dihydroxy compound and a benzophenone compound containing a protonic acid group to polycondensation. The aromatic dihydroxy compound which can be used at that time, an aromatic dihydroxy compound represented by the following general formulae (2) and (3) can be cited. Concrete examples thereof include the following compounds and the like.

**HO-Ar₁-OH** (2)

**HO-Ar₂-OH** (3)

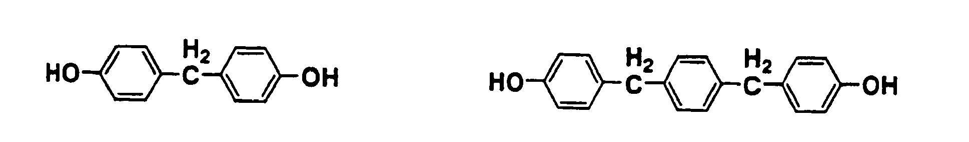

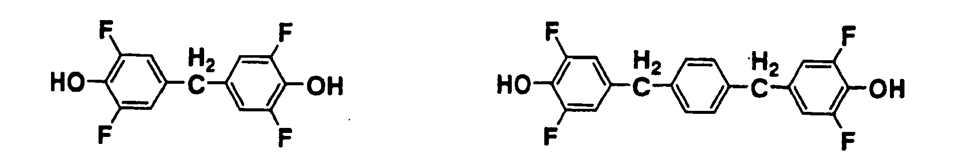

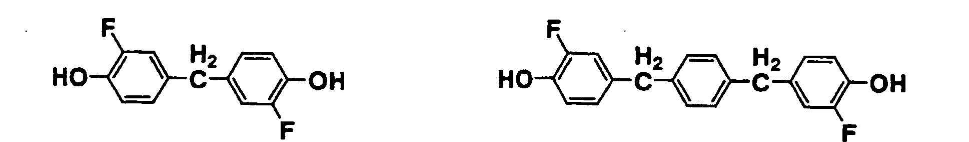

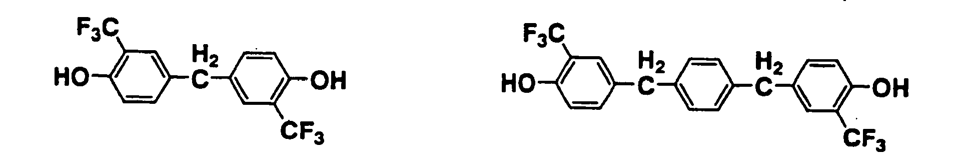

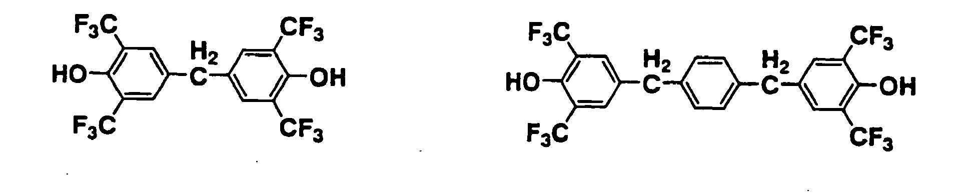

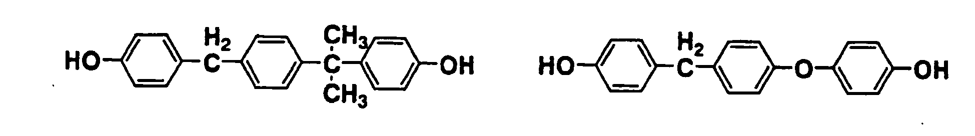

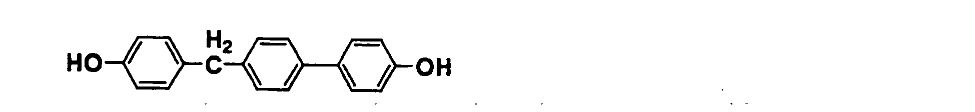

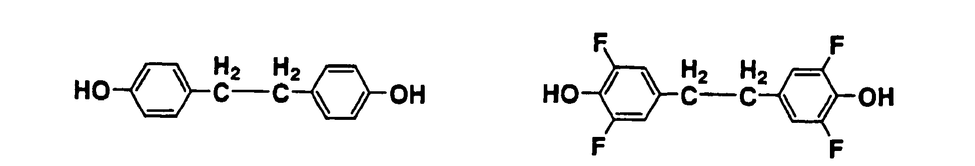

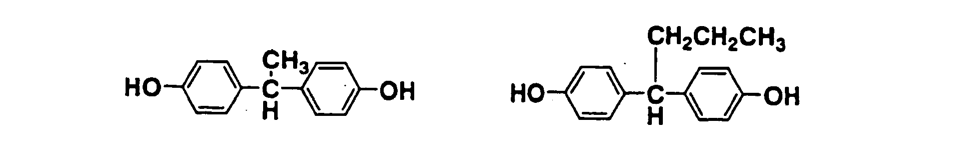

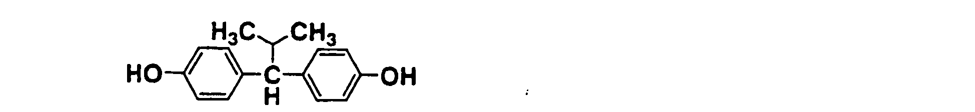

Furthermore, as the benzophenone compound to be used to synthesize the crosslinkable polyether ketone containing a protonic acid group, a benzophenone compound containing a protonic acid group represented by the following general formula (4) can be cited. Concrete examples thereof include the following compounds. In the formula (4), X, Y, x and y represent the same as in the formula (1). Z represents a halogen atom or a nitro group.

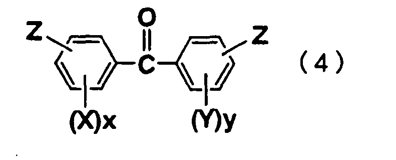

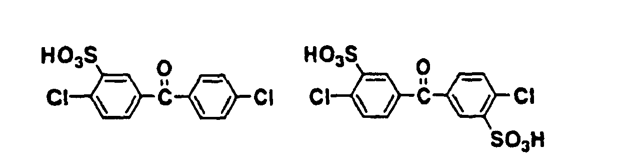

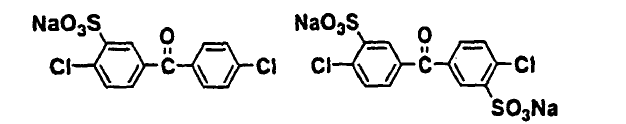

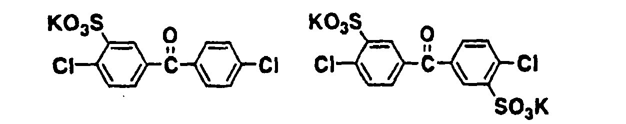

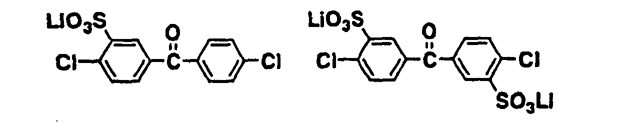

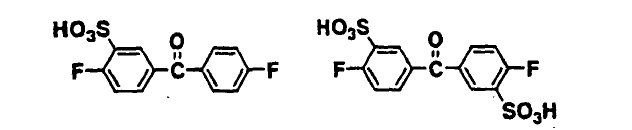

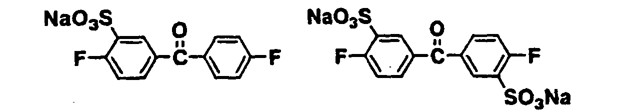

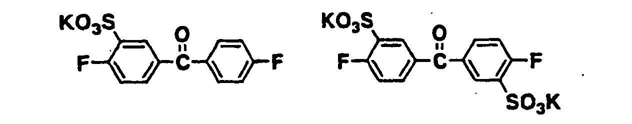

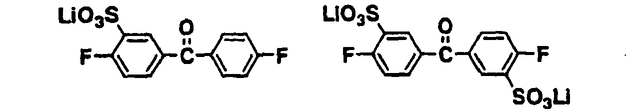

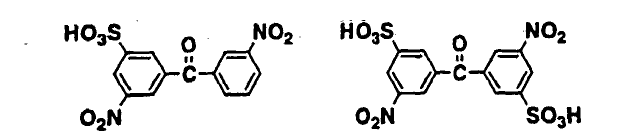

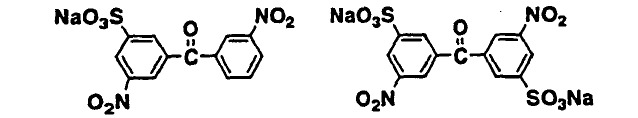

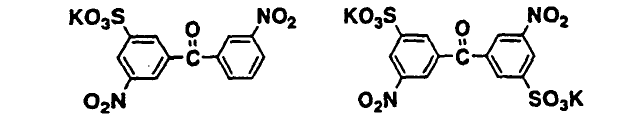

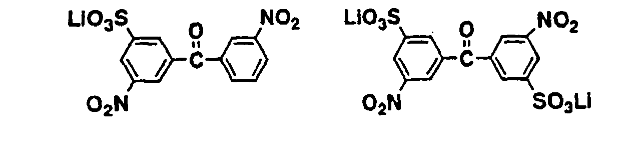

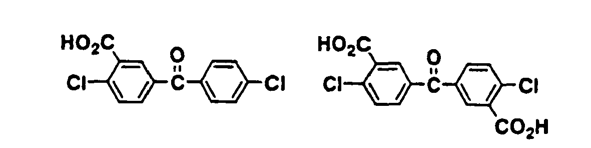

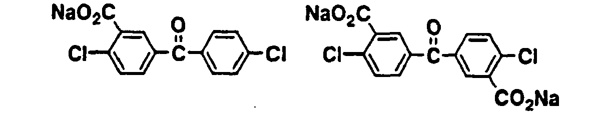

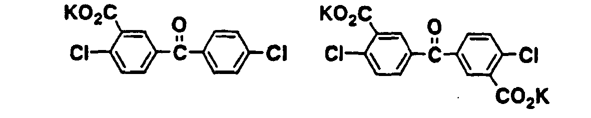

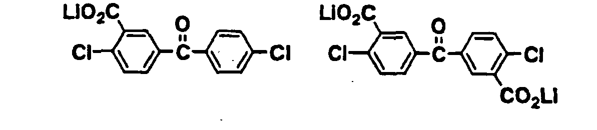

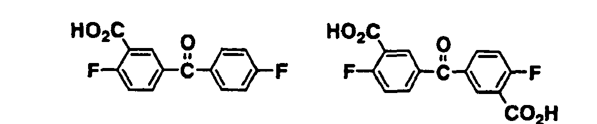

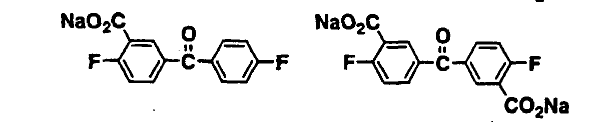

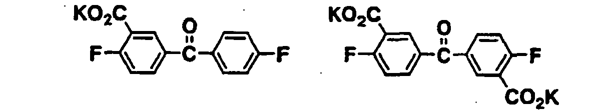

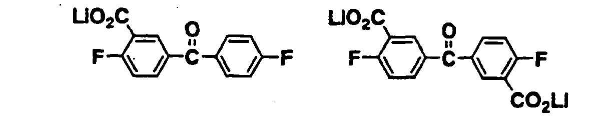

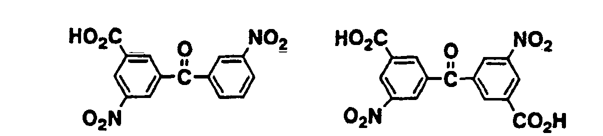

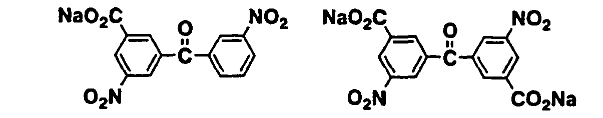

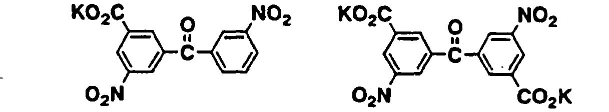

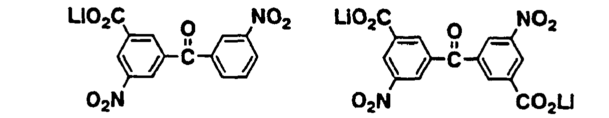

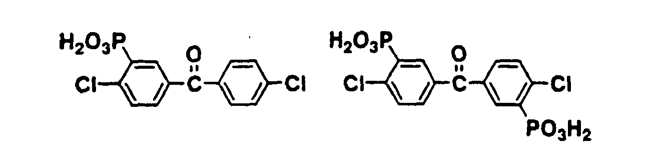

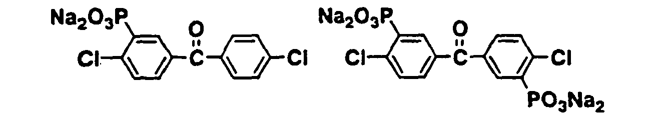

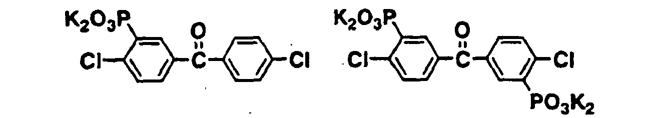

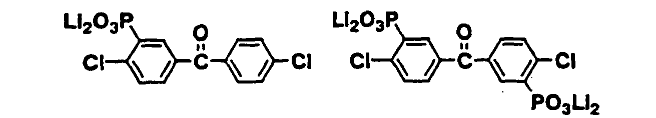

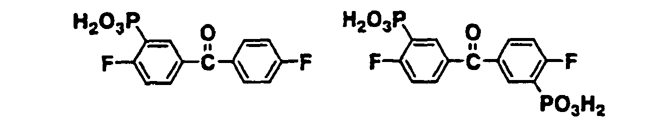

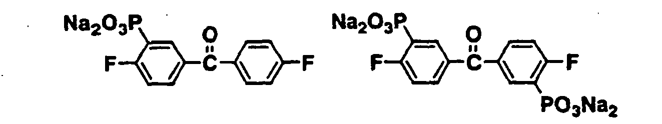

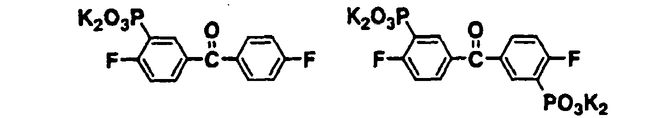

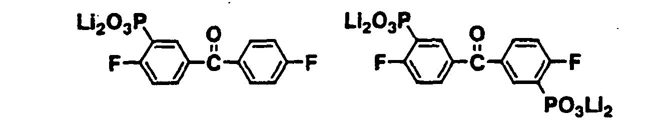

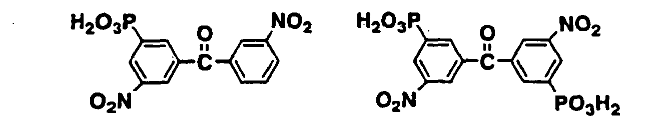

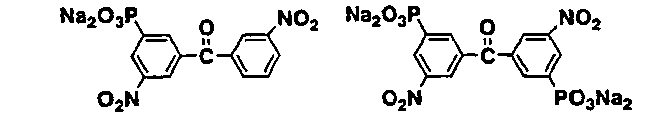

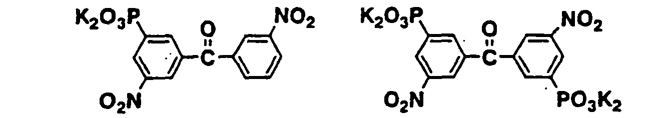

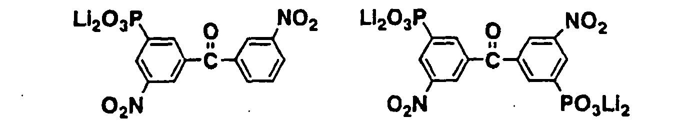

Furthermore, in synthesizing the crosslinkable polyether ketone containing a protonic acid group, a benzophenone compound which does not contain a protonic acid group represented by the following formula (5) may also be used for the purpose of controlling the content of the protonic acid group.

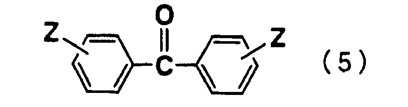

As the benzophenone compound which does not contain a protonic acid group represented by the above formula (5), there can be specifically exemplified, for example, the following compounds.

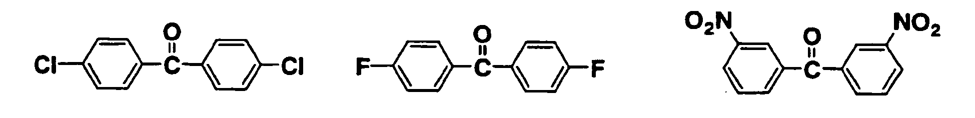

The crosslinkable polyether ketone containing a protonic acid group of the present invention can be subjected to copolycondensation using one or more kinds of the aromatic dihalides in addition to the benzophenone compound represented by the above general formulae (4) and (5) for the purpose of improving or modifying its performance. As the aromatic dihalide which can be used, there can be specifically exemplified 4,4'-dichlorodiphenylsulfone, 2,6-dichloropyridine, 2,6-dichlorobenzonitrile, 2,6-difluorobenzonitrile and the like.

The crosslinkable polyether ketone containing a protonic acid group of the present invention can be subjected to copolycondensation using one or more kinds of the other aromatic diol compounds, along with the aromatic dihydroxy compound represented by the above general formulae (2) and (3) for the purpose of improving or modifying its performance. As the aromatic dihydroxy compound which can be used, there can be specifically exemplified hydroquinone, resorcin, 4,4'-dihydroxybiphenyl, 2,2'-dihydroxybiphenyl, 3,3,'-dichloro-4,4'-dihydroxybiphenyl, 3,3',5,5'-tetrachloro-4,4'-dihydroxybiphenyl, 3,3,'-dibromo-4,4'-dihydroxybiphenyl, 3,3',5,5'-tetrabromo-4,4'-dihydroxybiphenyl, 3,3,'-difluoro-4,4'-dihydroxybiphenyl, 3,3',5,5'-tetrafluoro-4,4'-dihydroxybiphenyl, 4,4'-dihydroxydiphenylsulfide, 2,2'-dihydroxydiphenylsulfide, 3,3,'-dichloro-4,4'-dihydroxydiphenylsulfide, 3,3',5,5'-tetrachloro-4,4'-dihydroxydiphenylsulfide, 3,3,'-dibromo-4,4'-dihydroxydiphenylsulfide, 3,3',5,5'-tetrabromo-4,4'-dihydroxydiphenylsulfide, 3,3,'-difluoro-4,4'-dihydroxydiphenylsulfide, 3,3',5,5'-tetrafluoro-4,4'-dihydroxydiphenylsulfide, 4,4'-dihydroxydiphenylether, 2,2'-dihydroxydiphenylether, 3,3,'-dichloro-4,4'-dihydroxydiphenylether, 3,3',5,5'-tetrachloro-4,4'-dihydroxydiphenylether, 3,3,'-dibromo-4,4'-dihydroxydiphenylether, 3,3',5,5'-tetrabromo-4,4'-dihydroxydiphenylether, 3,3,'-difluoro-4,4'-dihydroxydiphenylether, 3,3',5,5'-tetrafluoro-4,4'-dihydroxydiphenylether, 4,4'-dihydroxydiphenylsulfone, 2,2'-dihydroxydiphenylsulfone, 3,3,'-dichloro-4,4'-dihydroxydiphenylsulfone, 3,3',5,5'-tetrachloro-4,4'-dihydroxydiphenylsulfone, 3,3,'-dibromo-4,4'-dihydroxydiphenylsulfone, 3,3',5,5'-tetrabromo-4,4'-dihydroxydiphenylsulfone, 3,3,'-difluoro-4,4'-dihydroxydiphenylsulfone, 3,3',5,5'-tetrafluoro-4,4'-dihydroxydiphenylsulfone, 2,2-bis(4-hydroxyphenyl)propane, 2,2-bis(2-hydroxyphenyl)propane, 2,2-bis(3-chloro-4-hydroxyphenyl)propane, 2,2-bis(3,5-dichloro-4-hydroxyphenyl)propane, 2,2-bis(3-bromo-4-hydroxyphenyl)propane, 2,2-bis(3,5-dibromo-4-hydroxyphenyl)propane, 2,2-bis(3-fluoro-4-hydroxyphenyl)propane, 2,2-bis(3,5-difluoro-4-hydroxyphenyl)propane, α,α'-bis(4-hydroxyphenyl)-1,4-diisopropylbenzene, α,α'-bis(2-hydroxyphenyl)-1,4-diisopropylbenzene, α,α'-bis(4-hydroxyphenyl)-1,3-diisopropylbenzene, α,α'-bis(2-hydroxyphenyl)-1,3-diisopropylbenzene, 2,2-bis(4-hydroxyphenyl)-1,1,1,3,3,3-hexafluoropropane, 9,9-bis(4-hydroxyphenyl)fluorene, 1,5-dihydroxynaphthalene and the like. These dihydroxy compounds may be sulfonated using a known sulfonating agent such as sulfuric acid, fuming sulfuric acid or the like.

When the crosslinkable polyether ketone containing a protonic acid group is subjected to polycondensation using the aromatic dihydroxy compound represented by the general formulae (2) and (3), and the compound represented by the general formulae (4) and (5), a polycondensation method in the presence of a basic catalyst is properly used. The types of the catalyst, the reaction conditions or the like are not particularly restricted, and the known basic catalysts, the known reaction conditions or the like can be applied. As the catalyst, there can be exemplified, for example, a basic metallic compound such as alkali metal, alkali earth metal, zinc oxide and the like, carbonate, acetate, hydroxide, quaternary ammonium salt and phosphonium salt of various metals, organic base-containing metal and the like. The amount of these catalysts is preferably from 0.1 to 5.0 molar ratio and more preferably from 0.5 to 2.0 molar ratio, based on 1 mole of the aromatic dihydroxy compound in use.

When the crosslinkable polyether ketone containing a protonic acid group is subjected to polycondensation using the aromatic dihydroxy compound represented by the general formulae (2) and (3) and the benzophenone compound represented by the general formulae (4) and (5), the whole amount of the benzophenone compound represented by the general formulae (4) and (5) is preferably from 0.9 to 1.1 molar ratio, based on 1 mole of the aromatic dihydroxy compound in use. By regulating this molar ratio, the molecular weight of the obtained polyether ketone can be controlled. Within this molar ratio, the polyether ketone with a molecular weight capable of exhibiting sufficient properties can be obtained. The molar ratio is more preferably from 0.92 to 1.08 molar ratio, further preferably from 0.94 to 1.06 molar ratio and the most preferably in the range of 0.95 to 1.05.

A method comprising adding the aromatic dihydroxy compound represented by the general formulae (2) and (3), and the benzophenone compound represented by the general formulae (4) and (5) into the polycondensation reaction system for reacting is not particularly restricted. Mainly, one of the following methods is preferable as a method for obtaining a high molecular weight polyether ketone,
1) a method comprising further adding both of the aromatic dihydroxy compound and the benzophenone compound, and the basic catalyst into the polymerization reaction system for carrying out the reaction; or
2) a method comprising forming salts by the reaction of the aromatic dihydroxy compound with the basic catalyst and then adding the benzophenone compound thereto for carrying out the reaction.

The reaction for preparing the crosslinkable polyether ketone containing a protonic acid group according to the present invention is usually carried out in a solvent. Examples of the solvent which can be used include the following.
a) non-protonic amide type solvents such as N,N-dimethylformamide, N, N-dimethylacetamide, N, N-diethylacetamide, N-methyl-2-pyrrolidone, 1,3-dimethyl-2-imidazolidinone, N-methylcaprolactam, and hexamethylphosphorotriamide;
b) ether type solvents such as 1,2-dimethoxyethane, bis(2-methoxyethyl)ether, 1,2-bis(2-methoxyethoxy)ethane, tetrahydrofuran, bis[2-(2-methoxyethoxy)ethyl]ether, and 1,4-dioxane;
c) amine type solvents such as pyridine, quinoline, isoquinoline, α-picoline, β-picoline, γ-picoline (gamma-picoline), isophorone, piperidine, 2,4-lutidine, 2,6-lutidine, trimethylamine, triethylamine, tripropylamine, and tributylamine; and
d) other solvents such as dimethyl sulfoxide, dimethyl sulfone, diphenyl ether, sulfolane, diphenyl sulfone, tetramethyl urea, and anisole.
   These solvents may be used singly or in combination of two or more kinds. Further, the solvents mentioned in the following item e) can be used singly or in combination of two or more kinds. When they are used in combination, there is no need to select the combination of solvents which are dissolving each other at an arbitrary ratio. Even the solvents which are not mixed with each other and thus non-uniform can also be used.
   The concentration of the reaction that is carried out in any of the foregoing solvents (hereinafter referred to as the polycondensation concentration) is not particularly restricted. When the polycondensation concentration is defined as a percentage value of the ratio of the total weight of the aromatic dihydroxy compound to the benzophenone compound in use, based on the total weight obtained by adding the total weight of the whole solvents in use, and the total weight of the aromatic dihydroxy compound and the benzophenone compound in use, the polycondensation concentration is preferably from 5 to 40%, more preferably from 8 to 35%, and the most preferably from 10 to 30%.
   By reacting the aromatic dihydroxy compound in the general formulae (2) and (3) with the benzophenone compound in the general formulae (4) and (5) in the above solvents, the crosslinkable polyether ketone containing a protonic acid group according to the present invention is obtained.
   In this reaction, particularly preferred examples of the solvent include a) non-protonic amide type solvents and d) dimethyl sulfoxide. As the atmosphere, air, nitrogen, helium, neon and argon are used. The atmosphere is not particularly restricted, but an inert gas such as nitrogen or argon is preferable.
   Furthermore, in order to remove the water generated by the reaction out of the system, other solvents can be present together. Examples of such solvents include the following.
e) Benzene, toluene, o-xylene, m-xylene, p-xylene, chlorobenzene, o-dichlorobenzene, m-dichlorobenzene, p-dichlorobenzene, bromobenzene, o-dibromobenzene, m-dibromobenzene, p-dibromobenzene, o-chlorotoluene, m-chlorotoluene, p-chlorotoluene, o-bromotoluene, m-bromotoluene, and p-bromotoluene.

These solvents may be used singly or in combination of two or more kinds. Further, using the solvents shown in the above items a) to d), a kind or two or more kinds thereof can be further mixed therewith and used accordingly. When they are used in combination, there is no need to select the combination of solvents which are dissolving each other at an arbitrary ratio. Even the solvents which are not mixed with each other and thus non-uniform can also be used. There are not any restrictions on the amount of these solvents used.

The reaction temperature, the reaction time and the reaction pressure are not particularly restricted and any known conditions can be applied thereto. That is, the reaction temperature is preferably from about 100 to 300°C, more preferably in the range of 120 to 280°C, and the most preferably from 150 to 250°C for carrying out the reaction. Meanwhile, the reaction time is different depending on the types of the monomer and the solvent in use, and the reaction temperature, but it is preferably from 1 to 48 hours, and more preferably from 5 to 20 hours. Further, as for the reaction pressure, an atmospheric pressure is sufficient..

After completion of the reaction, it is preferable to do filtering in order to remove the catalyst, foreign substances such as wastes or the like. The temperature for filtering is not particularly restricted and may be the reaction temperature or a room temperature. Furthermore, the pressure for filtering is not particularly restricted, and may be any conditions of an atmospheric pressure, an applied pressure or a reduced pressure.

As a method for forming a membrane of the crosslinkable polyether ketone containing a protonic acid group, either of a method comprising coating on a base material with the solution obtained by filtering as it is and drying for directly forming a coated membrane, or a method comprising discharging the solution to a poor solvent and taking out a solid content alone, drying the solid content to have a polymer powder, and again dissolving the polymer powder in the same or different solvent, coating on the base material with the solution and drying for forming a coated polyether ketone membrane on the base material may be good.

The drying temperature for forming a coated membrane by drying the solution is different depending on the solvent in use, which is not particularly restricted. It is in the range of 100 to 300°C, preferably in the range of 120 to 280°C and particularly preferably in the range of 150 to 250°C. Meanwhile, the drying time is different depending on the thickness of the coated membrane and the like, but it is from 10 minutes to 20 hours, preferably from 20 minutes to 10 hours and practically preferably from 30 minutes to 5 hours.

The reduction viscosity of the obtained crosslinkable polyether ketone containing a protonic acid group is from 0.1 to 5.0 dl/g (measured at the concentration of 0.5 g/dl at 35°C in dimethyl sulfoxide), preferably from 0.2 to 4.0 dl/g, and further preferably in the range of 0.3 to 3.0 dl/g. With the reduction viscosity in the above range, the mechanical properties of the obtained membrane are sufficient and the viscosity of the solution obtained by dissolving a polymer in a solvent is appropriate so that it is easy to obtain a thick membrane.

Furthermore, the crosslinkable polyether ketone containing a protonic acid group according to the present invention can be used in combination of two or more kinds thereof and can be used in combination with a fiber comprising a metal fiber, a glass fiber or a carbon fiber, or with a fluorinated ion conductive resin or other general-purpose resins in the ranges in which the object of the present invention is not damaged.

Furthermore, the aforementioned crosslinkable polyether ketone containing a protonic acid group is used after it is crosslinked, and can be mixed with two or more kinds of the crosslinked products, or in combination of the crosslinked product with a fiber comprising a metal fiber, a glass fiber or a carbon fiber, a fluorinated ion conductive resin or other general-purpose resins. In that case, the crosslinkable polyether ketone containing a protonic acid group is preferably contained in the amount of not less than 20 wt% and more preferably contained in the amount of not less than 50 wt%. Further, an end group of the crosslinkable polyether ketone containing a protonic acid group in use is not particularly restricted.

Crosslinkage of the crosslinkable polyether ketone containing a protonic acid group according to the present invention is explained below.

A carbonyl group adjacent to the aromatic ring can be crosslinked with an alkyl group or an alkylene group directly linked to the aromatic ring, i.e., a CH bond of primary, secondary or tertiary carbon adjacent to the aromatic ring. In addition, the carbonyl group can be crosslinked with an unsaturated bond such as a carbon-carbon double bond, a carbon-carbon triple bond or the like, a carbon-carbon double bond, a CH bond of carbon adjacent to a nitrogen atom or an oxygen atom. However, the carbonyl group is preferably crosslinked with primary, secondary or tertiary carbon directly linked to the aromatic ring from the viewpoints of the stability of the generated crosslinkage and easy synthesis of the crosslinking group. The crosslinkable polyether ketone containing a protonic acid group of the present invention has a preferred crosslinking group of the carbonyl group and the alkylene bonding group directly linked to the aromatic ring in the main chain.

The crosslinkable polyether ketone containing a protonic acid group according to the present invention can be crosslinked by at least one of a light (ultraviolet rays), a heat, an electron beam or the like. For example, the reaction mechanism for photo-crosslinkage is considered that at least one alkylene bonding group of the above Ar₁ and Ar₂ is involved in the crosslinking reaction in the following manner. Furthermore, the following reaction mechanism is applied when the crosslinking Ar₁ and Ar₂ are as follows.

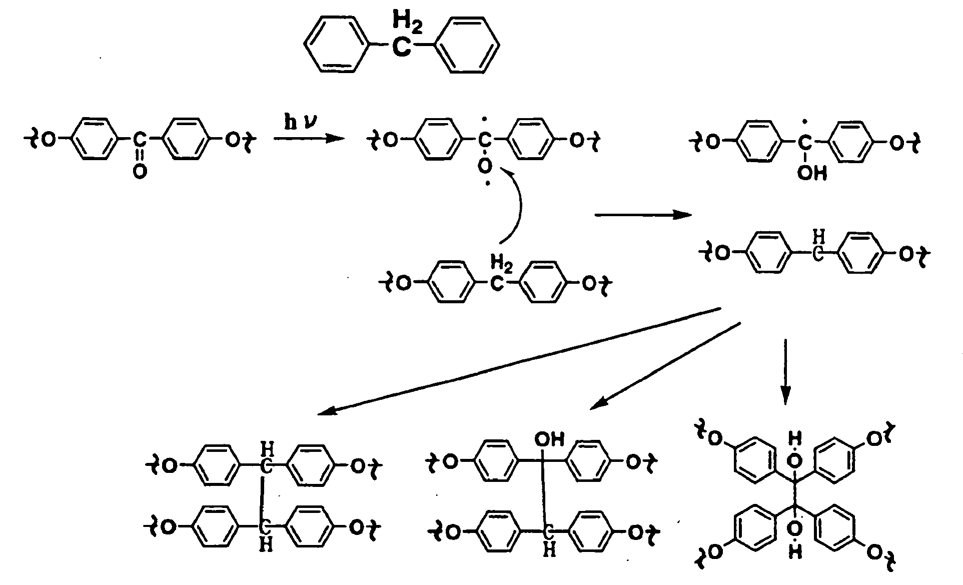

As shown in the above reaction mechanism, a radical on benzophenone generated at the first stage of an irradiation with ultraviolet rays pulls out hydrogen from a methylene group. Subsequently, it is considered that photo-crosslinkage is carried out by dimerization of a benzyl radical, a coupling reaction of the benzyl radical with an alcohol carbon radical, or dimerization of an alcohol carbon radical.

A light source to be used, when the crosslinkable polyether ketone containing a protonic acid group of the present invention is subjected to photo-crosslinkage, is not particularly restricted, but a light source capable of irradiating with a light in the range of ultraviolet light and visible light can be usually used. Concrete examples thereof include a low pressure mercury lamp, a high pressure mercury lamp, a xenon lamp, a metal halide lamp and the like. Furthermore, the exposure dose is different depending on the structure of the crosslinkable ion conductive resin being irradiated and its membrane thickness, but it is usually from 100 to 30000 mJ/cm², and preferably from 500 to 20000 mJ/cm².

Meanwhile, when crosslinkage is carried out by a heat, a method for supplying the heat is not particularly restricted and heating by a usual oven or the like is sufficient. Further, the temperature and the time for heating are different depending on the structure of the crosslinkable polyether ketone in use, but they are usually from 120 to 300°C and for 0.1 to 180 minutes, and preferably from 150 to 250°C and for 1 to 60 minutes.

In the manner as described above, the crosslinked product according to the present invention is obtained.

As the ion conductive polymer membrane according to the present invention, it is preferable to use a crosslinked product obtained by crosslinking a crosslinkable ion conductive resin comprising the aforementioned polyether ketone containing a protonic acid group, but it is also possible to combine with other various ion conductive polymers. Examples thereof include polymers such as a fluorine polymer, a polyether ketone polymer, a polyether sulfone polymer, a polyphenylene sulfide polymer, a polyimide polymer, a polyamide polymer, an epoxy polymer, a polyolefin polymer and the like which are forcefully given with a protonic acid group. As the protonic acid group, there can be exemplified, for example, a sulfonic acid group, a carboxylic acid group, a phosphoric acid group, and a sulfonimide group. Further, an inorganic ion conductive substance such as silica or the like may further be used. Further, the aforementioned crosslinkable polyether ketone containing a protonic acid group can also be used in combination of two or more kinds

A method for preparing the ion conductive polymer membrane according to the present invention is not particularly restricted, and a known press method or a cast method can be used. Furthermore, a thickness of the electrolyte membrane of the ion conductive polymer is not particularly restricted, but it is usually from 10 to 200 µm and further preferably from 30 to 100 µm. Within this range, sufficient membrane strength is obtained and the membrane resistance is practically sufficiently lowered. That is, by cutting off the fuel between the positive electrode and the negative electrode, and having sufficient ion conductivity, excellent power generating performance can be obtained as a fuel cell.

When the thickness of the membrane is too thin, fuel crossover cannot be sufficiently suppressed in some cases, while when it is too thick, the membrane resistance is high, thereby influencing the power generating performance in some cases. The membrane thickness can be controlled by the conditions when forming a membrane, for example, the temperature or the pressure upon press molding, the concentration of a varnish upon casting, the coating thickness or the like.

A method for crosslinking the ion conductive polymer membrane of the present invention can be carried out in the same manner as in the crosslinkage of the aforementioned ion conductive resin.

Furthermore, after the above crosslinkable polyether ketone containing a protonic acid group is crosslinked, a film can be produced by the crosslinked product alone, by mixing two or more of the crosslinked products, or by combination of the crosslinked product with a fiber comprising a metal fiber, a glass fiber or a carbon fiber, a fluorinated ion conductive resin or other general-purpose resins. In that case, the aforementioned crosslinkable polyether ketone containing a protonic acid group is preferably contained in the amount of not less than 20 wt% and more preferably contained in the amount of not less than 50 wt%.

The ion conductive binder for a fuel cell according to the present invention is explained in detail below.

The crosslinkable ion conductive resin containing a protonic acid group of the present invention exhibits high ion conductivity like a polymer containing a sulfonic acid group that has been conventionally developed. Furthermore, since this resin has a polar group such as an aromatic ring, an ether bond or the like in its structure differently from a superacid group-containing fluorinated polymer that has been conventionally reviewed as a binder, it exhibits high adhesion to other substances such as an electrode material, an aromatic type polymer electrolyte membrane containing a protonic acid group or the like. Further, the resin is crosslinked by a light, a heat, an electron beam or the like. As a result, it exhibits high heat resistance and water resistance.

The binder according to the present invention comprises the crosslinked product of the aforementioned crosslinkable polyether ketone containing a protonic acid group and the crosslinked product thereof can also be used in combination of other various ion conductive polymers. Examples of other various ion conductive polymers include polymers such as a fluorine polymer, a polyether ketone polymer, a polyether sulfone polymer, a polyphenylene sulfide polymer, a polyimide polymer, a polyamide polymer, an epoxy polymer, a polyolefin polymer and the like which are forcefully given with a protonic acid group. As the protonic acid group, there can be exemplified, for example, a sulfonic acid group, a carboxylic acid group, a phosphoric acid group, and a sulfonimide group. Further, an inorganic ion conductive substance such as silica or the like may further be used.

The crosslinkable polyether ketone containing a protonic acid group is preferably contained in the amount of not less than 5 wt% in the binder, whereby it exhibits high adhesion to other substances such as an electrode material, an aromatic type polymer electrolyte membrane containing a protonic acid group or the like. Further, the binder is crosslinked by a light, a heat, an electron beam or the like. As a result, it exhibits high heat resistance and water resistance. When the binder of the present invention is crosslinked by a light, a light source to be used is not particularly restricted, but a light source capable of irradiating with a light in the range of ultraviolet light and visible light can be usually adopted. Concrete examples thereof include a low pressure mercury lamp, a high pressure mercury lamp, a xenon lamp, a metal halide lamp and the like. Furthermore, the exposure dose is different depending on the structure of the crosslinkable polyether ketone in use and its membrane thickness, but it is usually from 100 to 30000 mJ/cm², and preferably from 500 to 20000 mJ/cm². When the binder of the present invention is crosslinked by a heat, a method for supplying the heat is not particularly restricted and heating by a usual oven or the like is sufficient. Further, the temperature and the time for heating are different depending on the structure of the crosslinkable polyether ketone in use and its membrane thickness, but they are usually from 120 to 300°C and for 0.1 to 180 minutes, and preferably from 150 to 250°C and for 1 to 60 minutes.

The binder of the present invention can be used as a varnish. The varnish comprises the above binder and a solvent, which may be a solution or a suspension. If a solvent can make the binder liquefied, such a solvent can be selected without any specific restrictions. Examples thereof include water; alcohols such as methanol, ethanol, 1-propanol, 2-propanol, butanol, methoxy ethanol, ethoxy ethanol and the like; hydrocarbons such as toluene, xylene and the like; halogenated hydrocarbons such as methyl chloride, methylene chloride and the like; ethers such as dichloroethylether, 1,4-dioxane, tetrahydrofuran, monoglyme, diglyme and the like; fatty acid esters such as methyl acetate, ethyl acetate and the like; ketones such as acetone, methylethyl ketone and the like; amides such as N,N-dimethylacetamide and the like; N-methyl-2-pyrrolidone, dimethyl sulfoxide, dimethyl carbonate and the like. These can be used singly or used as a combined solvent.

Of these, lower alcohols, tetrahydrofuran, dimethyl carbonate and the like are preferable as they have low boiling point, the solvent is rapidly evaporated, and they are water-soluble. Further, a mixed solvent of these solvents with water is more preferably used. The concentration of the binder can be properly selected according to the method of using, but it is preferably from 1 to 80 wt%.

The composition for forming an electrode according to the present invention comprises a binder comprising the crosslinked product obtained by crosslinking the crosslinkable polyether ketone containing a protonic acid group of the present invention, and an electrode material. The ratio of the binder to the electrode material is not particularly restricted. The ratio of the binder is preferably from 5 to 90 wt%. Within the range, the electron strength and efficiency can be achieved at the same time.

Herein, examples of the electrode material include a conductive material having an electric conductivity, a catalyst promoting the oxidation reaction of hydrogen, the reduction reaction of oxygen, and the like. A conductive material may be good as far as it is an electric conductive substance and examples thereof include various metals, carbon materials or the like. Examples thereof include carbon black such as acetylene black or the like, an activated carbon, graphite and the like. These are used singly or in combination, or in a powder shape or in a sheet shape. The catalyst is not particularly restricted as far as it promotes the oxidation reaction of hydrogen, the reduction reaction of oxygen or the like. Examples thereof include lead, iron, manganese, cobalt, chrome, gallium, vanadium, tungsten, ruthenium, iridium, palladium, platinum, rhodium or alloys thereof.

The electrode according to the present invention comprises the foregoing crosslinkable polyether ketone containing a protonic acid group or a binder comprising the crosslinkable polyether ketone containing a protonic acid group and other various ion conductive polymers, and a composition for forming an electrode comprising the aforementioned electrode material.

The fuel cell according to the present invention comprises at least one of the ion conductive polymer membrane, the ion conductive binder, the electrode composition and the electrode.

A method for forming an electrode for a fuel cell and a membrane electrode assembly for a fuel cell is explained below.

To form an electrode for a fuel cell and a membrane electrode assembly for a fuel cell using the binder and/or the composition for forming an electrode or a varnish thereof according to the present invention, the following methods can be cited.

A method comprising directly joining it to an electrolyte membrane after spraying and coating on a base material such as carbon paper or the like with a varnish comprising the binder and/or the composition for forming an electrode according to the present invention to have an electrode; a method comprising joining it to an electrolyte membrane using a varnish comprising the crosslinkable ion conductive resin according to the present invention after spraying and coating on a base material such as carbon paper or the like with a varnish comprising the binder and/or the composition for forming an electrode according to the present invention, and drying to have an electrode; a method comprising joining after spraying and coating directly on an electrolyte membrane with a varnish comprising the binder and/or the composition for forming an electrode according to the present invention and drying; or a method comprising joining an electrode prepared by using other methods to an electrolyte membrane using a varnish comprising the crosslinkable ion conductive resin according to the present invention can be mentioned.

A method for joining the electrolyte membrane to the electrode is not particularly restricted, but a hot press, a cold press, ultrasonic deposition and the like can be cited. Of these methods, a hot press is preferably used.

Furthermore, in each of the above joining methods, the crosslinkage can be carried out by irradiation with a light and/or a heat or an electron beam.

The fuel cell of the present invention comprises a polymer electrolyte membrane having an ion conductivity, and a positive electrode and a negative electrode arranged joined to both sides of the polymer electrolyte membrane. Hydrogen of a fuel or a methanol aqueous solution is electrochemically oxidized at the negative electrode for generating protons and electrons. The proton moves to the positive electrode in which oxygen is fed by passing through inside the polymer electrolyte membrane. On the other hand, the electron generated at the negative electrode flows into the positive electrode via a load connected to a fuel cell, and generates water by the reaction of the proton with the electrode at the positive electrode.

### EXAMPLES

The present invention is now more specifically illustrated below with reference to Examples. However, the present invention is not restricted to these Examples.

Methods of various tests in Examples are shown below.

### (a) Reduction viscosity of a polyether ketone containing a protonic acid group

0.50 g of polyether ketone powder was dissolved in 100 ml of dimethyl sulfoxide or N-methyl-2-pyrrolidone, and then a reduction viscosity was measured at 35°C.

### (b) Proton exchange

A metal salt of a protonic acid or the like was returned to a free protonic acid in the following methods.
1) A crosslinkable ion conductive polyether ketone membrane containing a protonic acid group was immersed in 2N-sulphuric acid for one night.
2) The acid-treated membrane was immersed in the distilled water for one night.
3) The membrane which was acid-treated and washed with the distilled water was dried at 150°C for 4 hours to obtain a membrane containing a free protonic acid.

### (c) Photo-crosslinkage

Photo-crosslinkage was carried out by an irradiation with a light of 14000 mJ/cm² using a metal halide lamp.

### (d) Glass transition temperature

It was measured at a temperature elevation rate of 10°C/min using a differential scanning calorimetry (DSC, DSC3100 manufactured by Shimadzu Corporation).

### (e) Ion conductivity

An ion conductive membrane was cut in a width of 5 mm and a length of 40 mm and then positioned on a PTFE (polytetrafuloroethylene) folder, and four electrodes were pressure-joined to measure the resistivity from a circular arc obtained by the AC impedance method of a 4 terminal method. The interval between the voltage terminals was 20 mm. Impedance was measured using an LCR meter (3532, a product of Hioki E.E. Corporation). The temperature was changed while an electrode-connected sample was put in a thermostatic chamber made of an aluminum block to measure the conductivity in the temperature range of 30 to 110°C. Humidity was supplied by flowing vapor into the thermostatic chamber of an atmospheric pressure, and vapor generated by a vapor generator was used by heating the distilled water at a temperature of the thermostatic chamber + 5°C when a measured temperature is less than 100°C and at a constant temperature of 120°C when a measured temperature is not less than 100°C.

Furthermore, the membrane thickness was measured using a micrometer at a dried state.

### (f) Methanol permeation rate

At a room temperature, the distilled water and 1 mole/liter methanol aqueous solution came into contact with each other via an ion conductive polymer membrane having a diameter of 23 mm to measure the concentration change in methanol of the distilled water side using a reflective index meter (RID-6A, manufactured by Shimadzu Corporation). The methanol permeation rate was calculated at a membrane thickness of 50 µm from a slope of a straight line of increase in the obtained methanol concentration.

### Synthesis Example 1

A reaction flask was provided with a stirrer, a thermometer, and a condenser tube. Thereinto were fed 4,4'-difluorobenzophenone (0.525 mole) and 210 ml of 50% fuming sulphuric acid, which was then reacted at 100°C for 12 hours. The resultant was discharged to 1000 g of the ice water and then neutralized with 210 g of NaOH. Next, 210 g of NaCl was added thereto, and the mixture was heated, dissolved, air-cooled and allowed to stand for one night. The precipitated crystal was filtered out and then 400 ml of water and 400 ml of ethanol were added thereto. The mixture was heated, dissolved, and then air-cooled for carrying out recrystallization. The precipitated crystal was filtered out and then dried at 100°C for 6 hours to obtain a white crystal of 5,5'-carbonyl bis(sodium 2-fluorobenzenesulfonate).
Amount: 155.2g (0.386 mole, yield 70%)
¹H-NMR (D₂O, TMS) ppm
δ 7.46 (2H, dd, a-H×2)
7.99 (2H, ddd, b-H×2)
8.23 (2H, dd, c-Hx2)

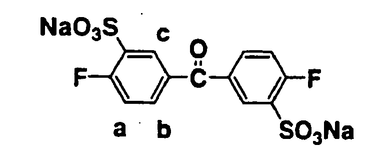

| Element analysis (%) | C | H |
|---|---|---|
| Calculated value | 36.98 | 1.43 |
| Analyzed value | 36.65 | 1.40 |

### Example 1

A 4-necked reactor was provided with a nitrogen inlet tube, a thermometer, a reflux condenser, and a stirrer. Therein were weighed 2.84 g (0.013 mol) of 4,4'-difluorobenzophenone, 2.96 g (0.007 mole) of 5,5'-carbonyl bis(sodium 2-fluorobenzenesulfonate), 4.00 g (0.02 mole) of 4,4'-dihydroxydiphenylmethane and 3.46 g (0.025 mole) of potassium carbonate. 50 ml of dimethyl sulfoxide and 40 ml of toluene were added thereto, and the resulting mixture was stirred under a nitrogen atmosphere and heated at 130°C for 4 hours. The water generated at this time was removed out of the system and then toluene was removed. Subsequently, the reaction was carried out at 160°C for 8 hours to obtain a viscous polymer solution. In the middle of the reaction, 20 ml of dimethylacetamide was added. After the completion of the reaction, 30 ml of dimethylacetamide was further added for diluting and then filtered out. The polymer solution was discharged to 600 ml of toluene, and further decanted with 600 ml of acetone. The precipitated polymer powder was filtered out and then dried at 150°C for 4 hours to obtain 4.95 g of polymer powder (yield 51%). The reduction viscosity of the obtained polyether ketone powder was 1.3 dl/g. Meanwhile, the glass transition temperature was not observed till 400°C.

The obtained powder polymer was dissolved in N-methyl-2-pyrrolidone, cast on the glass substrate, and dried at 200°C for 4 hours to obtain a polyether ketone membrane containing Na sulfonate. The obtained membrane was highly flexible and strong. The polyether ketone membrane containing Na sulfonate was crosslinked according to the method described in item (c) and the membrane was further subjected to a proton exchange according to the method described in item (b) to obtain a sulfonate-containing photo-crosslinkable polyether ketone membrane. This membrane was measured for its ion conductivity according to the method described in item (e) above and a methanol permeation rate according to the method described in item (f). The results thereof are shown in Table 2. The obtained membrane was highly flexible and strong.

A part of the polyether ketone membrane containing Na sulfonate obtained by the above-described method was immersed in N-methyl-2-pyrrolidone and as a result was dissolved. On the other hand, the sulfonate-containing photo-crosslinkable polyether ketone membrane obtained by the above-described method became completely insoluble in N-methyl-2-pyrrolidone and water, and photo-crosslinked so that drug resistance and water resistance were confirmed to be improved.

### Examples 2 and 3

Various polyether ketone membranes were prepared by changing the ratio of the aromatic dihydroxy compound to the benzophenone compound containing a protonic acid group and the benzophenone compound which does not contain a protonic acid group as described in Example 1. A variety of physical properties of the obtained polyether ketone membranes are shown in Table 1 and the results of the ion conductivities measured are also shown in Table 2. In Examples, the protonic acid compound, the benzophenone compound and the aromatic dihydroxy compound in use are abbreviated as follows.
DFBP-2S: 5,5'-carbonyl bis(sodium 2-fluorobenzenesulfonate)
DFBP: 4,4'-difluorobenzophenone
BisF: 4,4'-dihydroxydiphenylmethane

### Comparative Example 1

Tg and the ion conductivity were measured in the same manner as in Example 1 using Nafion 112 membrane (a reagent of Aldrich Co.). The results of Tg measured are shown in Table 1, while those of the conductivity and the methanol permeation rate measured are shown in Table 2.

**[Table 1]**

| Examples | Dihydroxy compound [g(mole)] | Protonic acid compound [g(mole)] | Benzophenone compound [g(mole)] | Yield [%] | Reduction viscosity [dl/g] | Glass transition temperature [°C] |
|---|---|---|---|---|---|---|
| 1 | Bis-F 4.00 (0.020) | DFBP-2S 2.96 (0.007) | DFBP 2.84 (0.013) | 51 | 1.3 | not detected |
| 2 | Bis-F 4.00 (0.020) | DFBP-2S 4.22 (0.010) | DFBP 2.18 (0.010) | 55 | 1.2 | not detected |
| 3 | Bis-F 4.00(0.020) | DFBP-2S 5.49 (0.013) | DFBP 1.53 (0.007) | 58 | 1.3 | not detected |
| Comparative Example 1 | - | - | - | - | | 130 |

**[Table 2]**

| Examples | Conductivity [S/cm] (30°C/90°C) | Methanol Permeation Rate [µmole/cm²/min] Membrane thickness 50 µm conversion |
|---|---|---|
| 1 | 0.024 / 0.152 | 1.5 |
| 2 | 0.062 / 0.275 | 4.6 |
| 3 | 0.110 / 0.301 | 6.2 |
| Comparative Example 1 | 0.070 / 0.131 | 10.3 |

As apparent from Table 2, Examples 1 to 3 showed the ion conductivities which were equal to or values with no problem, and excellent methanol permeability, as compared to those of Nafion membrane in Comparative Example 1. Further, Tg was sufficiently higher than 130°C of the Nafion membrane. Thus, the heat resistance was confirmed to be greatly improved.

### Example 4

### 4-1) Electrolyte membrane

The sulfonate-containing photo-crosslinkable polyether ketone membrane obtained in Example 1 was an electrolyte membrane 1.

### 4-2) Preparation of a cathode (positive electrode) electrode

The polyether ketone powder obtained in Example 1 was subjected to a proton exchange according to the above method described in item (b). Taking 0.5 g of the obtained sulfonate-containing polyether ketone powder for a binder, 10 g of a varnish dissolved in a mixed solvent of 5.0 g of the distilled water and 4.5 g of tetrahydrofuran was mixed with 0.5 g of 20 wt% Pt-loaded catalyst (name: IFPC20) manufactured by Ishifuku Metal Industry Co., Ltd. The mixture was stirred after the ultrasonic wave was applied thereto to obtain a composition for forming an electrode for a cathode catalyst.

The carbon paper (grade: TGP-H-060) manufactured by Toray Industries, Inc. was coated with a catalyst composition for forming an electrode using an applicator, vacuum-dried at 70°C for 12 hours and then cut in a size of 5 cm² to obtain an electrode 2. The coating amount of the catalyst was 2 mg/cm² in terms of the Pt amount.

### 4-3) Preparation of an anode (negative electrode) electrode

Taking 0.5 g of the sulfonate-containing polyether ketone powder obtained in item 4-2) for a binder, 10 g of a varnish dissolved in a mixed solvent of 5.0 g of the distilled water and 4.5 g of tetrahydrofuran was mixed with 0.5 g of 30 wt% PtRu-loaded catalyst (name: IFPC30A) manufactured by Ishifuku Metal Industry Co., Ltd. The mixture was stirred after the ultrasonic wave was applied thereto to obtain a composition for forming an electrode for an anode catalyst.

The carbon paper (grade: TGP-H-060) manufactured by Toray Industries, Inc. was coated with a catalyst composition for forming an electrode, vacuum-dried at 70°C for 12 hours and then cut in a size of 5 cm² to obtain an electrode 2'. The coating amount of the catalyst was 2 mg/cm² in terms of the PtRu amount.

### 4-4) Preparation of an assembly

20 wt% tetrahydrofuran aqueous solution was sprayed to each one of the sulfonate-containing photo-crosslinkable polyether ketone membrane in item 4-1), the electrode 2 prepared in item 4-2) and the electrode 2' prepared in item 4-3). While spraying, the electrode 2 / the sulfonate-containing photo-crosslinkable polyether ketone membrane / the electrode 2' were laminated in such an order and fed into a hot press heated at 80°C in advance, and the electrode surface alone was pressurized at a pressure of 0.4 MPa. Then, at a state that it was pressurized, the temperature was elevated from 80 to 130°C over 15 minutes. The electrolyte membrane-electrode joint body after it was joined was almost in a dried state, but with no electrode peeled off.

### 4-5) Power generating test

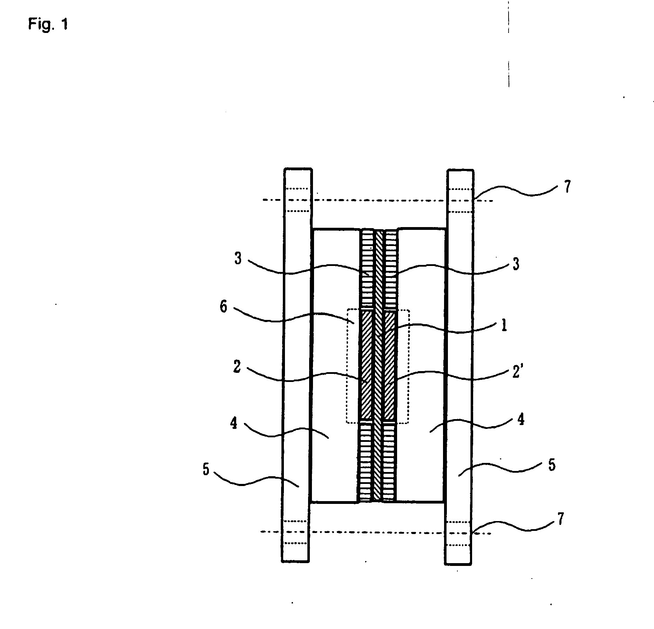

The electrolyte membrane-electrode joint body prepared in item 4-4) was put into a fuel cell test cell (grade: EFC-05-REF) manufactured by Electrochemical Co., Ltd. to assemble a fuel cell in Fig. 1. In Fig. 1, an electrolyte membrane 1 was inserted using the catalyst-fed electrodes 2 and 2' prepared in the above and a gasket 3. Further, there was a separator 4 at the outer side thereof. The whole body was surely fastened by a clamping bolt 7 using a pressure sensitive plate 5. A gas flow channel 6 was provided inside.

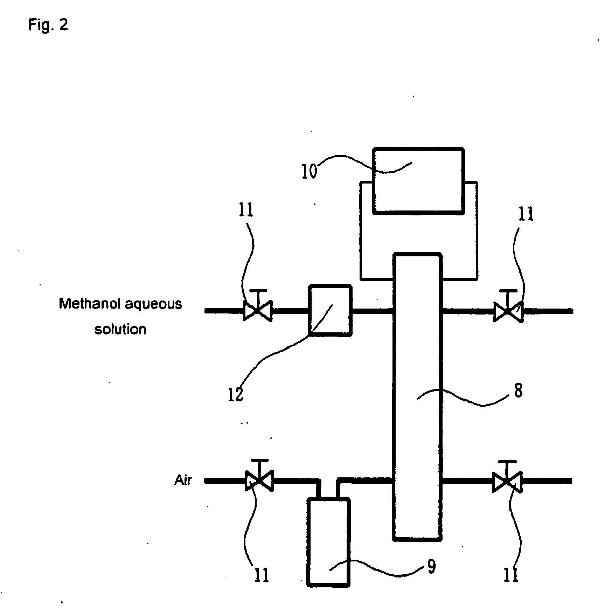

After the assembly of the cell, using a fuel cell evaluator as shown in Fig. 2, 1M methanol aqueous solution was used as a fuel to measure the fuel cell properties. The maximum output of about 5.6 mW/cm² was obtained (voltage: 0.18V, current: 32 mA/cm²).

In Fig. 2, the fuel cell of Fig. 1 was put into a fuel cell 8. In a line on the top of the drawing, the methanol aqueous solution was sent from the left to the right through the fuel cell 8 by a delivery pump 12. Furthermore, in a line on the bottom, air was circulating from the left to the right through the fuel cell 8 by a bubbling tank for humidifying 9 at a humidified state. The methanol aqueous solution was flowing through the flow channel 6 at the anode side, while air was flowing through the flow channel 6 at the cathode side. The amount of each flow was controlled by a mass flow controller 11. Voltage and current density generated by flowing the methanol aqueous solution and air were measured by an electronic load 10, whereby the fuel cell was evaluated by such a mechanism. The measurement conditions are shown in Table 3.

After the power generating test was completed, the cell was disassembled to observe the electrolyte membrane-electrode joint body. But there was found no peeling in the electrolyte membrane and the electrode.

**[Table 3]**

| Measurement conditions | Set value |
|---|---|
| Temperature of a fuel cell | 80°C |
| Concentration of a methanol aqueous solution | 1M (3.2%) |
| Flow of a methanol aqueous solution | 2 cc./min. |
| Temperature of a methanol aqueous solution | 30°C |
| Air pressure | 0.05 Mpa |
| Air flow | 100 SCCM |
| Temperature of an air bubbling tank | 50°C |

### INDUSTRIAL APPLICABILITY

According to the present invention, the crosslinked product obtained by crosslinking the crosslinkable ion conductive resin and the ion conductive polymer membrane using the resin have practically high ion conductivity and excellent heat resistance. Furthermore, since the binder according to the present invention has practically high ion conductivity, heat resistance and water resistance, and it has excellent adhesion to the electrode material or the aromatic type polymer electrolyte membrane containing a protonic acid group. Accordingly, the fuel cell formed by using the ion conductive polymer membrane and the binder has excellent durability, and can be a fuel cell capable of high current operation when resistance is low.

## Claims

1. A crosslinked product obtained by crosslinking a crosslinkable ion conductive resin by means of at least one of a light, a heat and an electron beam, the crosslinkable ion conductive resin comprising a crosslinkable polyether ketone having a repeating unit represented by the following general formula (1) 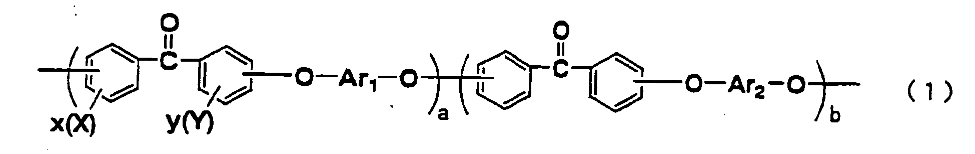 wherein, in the general formula (1), Ar₁ and Ar₂ have two or more aromatic rings respectively, at least two of which are bivalent groups linked by an alkylene bond; and hydrogen in an aromatic ring may be substituted with halogen, an alkyl group having 1 to 10 carbon atoms, a halogenated hydrocarbon group having 1 to 10 carbon atoms or a protonic acid group; the above alkylene is a group having 1 to 10 carbon atoms in which carbon atoms linked to an aromatic ring of at least one side are bonded to at least one hydrogen; Ar₁ and Ar₂ may be the same or different; X and Y respectively represent a protonic acid group selected from a sulfonic acid group, a carboxylic acid group, a phosphoric acid group, a sulfonimide group and an alkyl sulfonate group having 1 to 10 carbon atoms, or a group of a metal salt thereof; x and y are an integer of 0 to 4; x + y is at least not less than 1; and a and b are an integer of not less than 1.

2. An ion conductive polymer membrane comprising the crosslinked product as described in claim 1.

3. An ion conductive binder comprising the crosslinked product as described in claim 1.

4. A composition for forming an electrode comprising the ion conductive binder as described in claim 3, and an electrode material.

5. An electrode comprising the composition for forming an electrode as described in claim 4.

6. A fuel cell using the ion conductive polymer membrane as described in claim 2.

7. A fuel cell using the ion conductive binder as described in claim 3.

## Patentansprüche

1. Vernetztes Produkt, erhalten durch Vernetzen eines vernetzbaren Ionen-leitenden Harzes mittels wenigstens einem von Licht, Wärme und einem Elektronenstrahl, wobei das vernetzbare Ionen-leitende Harz ein vernetzbares Polyetherketon mit einer sich wiederholenden Einheit mit der folgenden allgemeinen Formel (1) umfaßt: 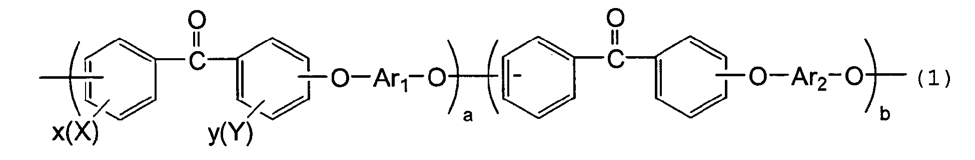 worin in der allgemeinen Formel (1) Ar₁ und Ar₂ zwei oder mehr aromatische Ringe haben, von denen wenigstens zwei bivalente Gruppen sind, die durch eine Alkylenbindung verknüpft sind; und Wasserstoff in einem aromatischen Ring durch Halogen, eine Alkylgruppe mit 1 bis 10 Kohlenstoffatomen, eine halogenierte Kohlenwasserstoffgruppe mit 1 bis 10 Kohlenstoffatomen oder eine protonische Säuregruppe substituiert sein kann; obiges Alkylen eine Gruppe mit 1 bis 10 Kohlenstoffatomen ist, in der Kohlenstoffatome, die an wenigstens einer Seite mit einem aromatischen Ring verknüpft sind, an wenigstens ein Wasserstoffatom gebunden sind; Ar₁ und Ar₂ gleich oder verschieden sein können; X bzw. Y eine protonische Säuregruppe, die unter einer Sulfonsäuregruppe, einer Carbonsäuregruppe, einer Phosphorsäuregruppe, einer Sulfonimidgruppe und einer Alkylsulfonatgruppe mit 1 bis 10 Kohlenstoffatomen ausgewählt wird, oder eine Gruppe eines Metallsalzes davon darstellen; x und y eine ganze Zahl von 0 bis 4 sind; x + y mindestens nicht weniger als 1 ist; und a und b eine ganze Zahl von nicht weniger als 1 sind.

2. Ionen-leitende Polymermembran, die das vernetzte Produkt wie in Anspruch 1 beschrieben umfaßt.

3. Ionen-leitendes Bindemittel, welches das vernetzte Produkt wie in Anspruch 1 beschrieben umfaßt.

4. Zusammensetzung zur Bildung einer Elektrode, die das Ionen-leitende Bindemittel wie in Anspruch 3 beschrieben und ein Elektrodenmaterial umfaßt.

5. Elektrode, welche die Zusammensetzung zur Bildung einer Elektrode wie in Anspruch 4 beschrieben umfaßt.

6. Brennstoffzelle, welche die Ionen-leitende Polymermembran wie in Anspruch 2 beschrieben verwendet.

7. Brennstoffzelle, die das Ionen-leitende Bindemittel wie in Anspruch 3 beschrieben verwendet.

## Revendications

1. Produit réticulé obtenu par réticulation d'une résine à conduction ionique réticulable par au moins un des moyens que sont une lumière, de la chaleur et un faisceau d'électrons, la résine à conduction ionique réticulable comprenant une polyéther-cétone réticulable comportant un motif récurrent représenté par la formule générale (1) suivante 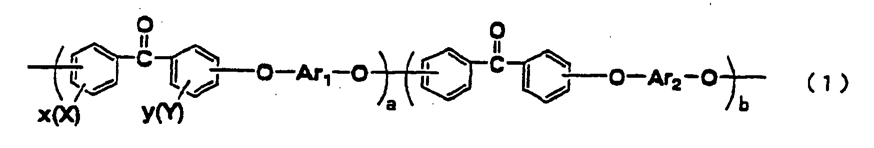 dans laquelle, dans la formule générale (1), Ar₁ et Ar₂ possèdent respectivement au moins deux noyaux aromatiques, au moins deux d'entre eux sont des groupes bivalents reliés par une liaison alkylène ; et l'atome d'hydrogène dans un noyau aromatique peut être substitué par un atome d'halogène, un groupe alkyle comportant 1 à 10 atomes de carbone, un groupe hydrocarboné halogéné comportant 1 à 10 atomes de carbone ou un groupe acide protonique ; le groupe alkylène ci-dessus est un groupe comportant 1 à 10 atomes de carbone dans lequel les atomes de carbone fixés à un noyau aromatique d'un côté au moins sont fixés à au moins un atome d'hydrogène ; Ar₁ et Ar₂ peuvent être identiques ou différents ; X et Y représentent respectivement un groupe acide protonique choisi parmi un groupe acide sulfonique, un groupe acide carboxylique, un groupe acide phosphorique, un groupe sulfonimide et un groupe alkylsulfonate comportant 1 à 10 atomes de carbone, ou un groupe d'un sel métallique de ceux-ci ; x et y représentent un nombre entier de 0 à 4 ; x + y est au moins non inférieur à 1 ; et a et b représentent un nombre entier non inférieur à 1.

2. Membrane de polymère à conduction ionique comprenant le produit réticulé tel que décrit dans la revendication 1.

3. Liant à conduction ionique comprenant le produit réticulé tel que décrit dans la revendication 1.

4. Composition permettant de former une électrode comprenant le liant à conduction ionique tel que décrit dans la revendication 3, et un matériau d'électrode.

5. Electrode comprenant la composition permettant de former une électrode telle que décrite dans la revendication 4.

6. Pile à combustible employant la membrane de polymère à conduction ionique telle que décrite dans la revendication 2.

7. Pile à combustible employant le liant à conduction ionique tel que décrit dans la revendication 3.
